Europäisches Patentamt

European Patent Office

Office européen des brevets

(19)

(11)  **EP 1 610 561 A2**

(12)  # EUROPEAN PATENT APPLICATION

(43) Date of publication:
**28.12.2005  Bulletin 2005/52**

(51) Int Cl.7: **H04N 7/26**

(21) Application number: **05291379.5**

(22) Date of filing: **27.06.2005**

(84) Designated Contracting States:
**AT BE BG CH CY CZ DE DK EE ES FI FR GB GR
HU IE IS IT LI LT LU MC NL PL PT RO SE SI SK TR**
Designated Extension States:
**AL BA HR LV MK YU**

(30) Priority: **27.06.2004  US 583447 P
09.01.2005  US 643917 P
28.04.2005  US 119414**

(71) Applicant: **APPLE COMPUTER, INC.**
**Cupertino, CA 95014 (US)**

(72) Inventors:
• **Kumar, Raj**
**San Francisco, CA 94110 (US)**
• **Pun, Thomas**
**San Jose, CA 95134 (US)**
• **Wu, Hsi-Jung**
**Sunnyvale, CA 94086 (US)**
• **Duvivier, Christian**
**Redwood City,CA 94061 (US)**

(74) Representative: **Hirsch & Associés**
**58, avenue Marceau**
**75008 Paris (FR)**

(54)  ## Encoding and decoding images

(57)  Some embodiments provide a method for encoding a first set of pixels in a first image by reference to a second image in a video sequence. In a first search window within a second image, the method searches to identify a first particular portion in the second image that best matches the first set of pixels in the first image. In the first search window within the second image, the method identifies a first location corresponding to the first particular portion. In a second search window within the second image, the method then searches to identify a second particular portion in the second image that best matches the first set of pixels in the first image, where the second search window is defined about the first location.

Figure 9

**EP 1 610 561 A2**

## Description

### FIELD OF THE INVENTION

The present invention is directed towards a method for encoding and decoding images.

### BACKGROUND OF THE INVENTION

Video codecs are compression algorithms designed to encode (i.e., compress) and decode (i.e., decompress) video data streams to reduce the size of the streams for faster transmission and smaller storage space. While lossy, current video codecs attempt to maintain video quality while compressing the binary data of a video stream.

A video stream typically is formed by a sequence of video frames. Video encoders often divide each frame into several macroblocks, with each macroblock being a set of 16x 16 pixels. Video encoders typically use intraframe encoding or interframe encoding to encode video frames or macroblocks within the video frames. An intraframe encoded frame or macroblock is one that is encoded independently of other frames or macroblocks in other frames.

An interframe encoded frame or macroblock is one that is encoded by reference to one or more other frames or macroblocks in other frames. Interblock encoding is typically time consuming, as the encoding has to compare macroblocks or partitions within macroblocks of a particular frame with the macroblocks or partitions within the macroblocks of another reference frame. Therefore, there is a need in the art for more efficient interblock encoding methods. Ideally, such encoding methods will speed up the encoding and decoding operations.

### SUMMARY OF THE INVENTION

Some embodiments provide a method for encoding a first set of pixels in a first image by reference to a second image in a video sequence. In a first search window within a second image, the method searches to identify a first particular portion in the second image that best matches the first set of pixels in the first image. In the first search window within the second image, the method identifies a first location corresponding to the first particular portion. In a second search window within the second image, the method then searches to identify a second particular portion in the second image that best matches the first set of pixels in the first image, where the second search window is defined about the first location.

Some embodiments provide a method for interblock encoding images in a video sequence. Each image in the video sequence has several integer pixel locations, with each integer pixel location having at least one image value (e.g., a luminance value). The method selects a first image for encoding by reference to a second image. The method then identifies a set of non-integer pixel locations in the second image that match a set of pixels in the first image. This identification entails interpolating the image values associated with the non-integer pixel locations in the second image from the image values of several integer pixel locations in the second image. The method stores the interpolated image values of the non-integer pixel locations for later use during the encoding of a third image by reference to the second image.

Some embodiments provide a method for interblock decoding images in a video sequence. Each image in the video sequence has several integer pixel locations, with each integer pixel location having at least one image value (e.g., a luminance value). The method selects a first image for decoding by reference to a second image. The method then identifies a set of non-integer pixel locations in the second image that correspond to a set of pixels in the first image. The method then interpolates the image values associated with the non-integer pixel locations in the second image from the image values of several integer pixel locations in the second image. The method stores the interpolated image values of the non-integer pixel locations for later use during the decoding of a third image by reference to the second image.

Some embodiments provide a method for interblock processing a first portion in a first image by reference to a second image in a sequence of video images. The method divides the second image into a set of tiles and stores the tiles in a first non-cache memory storage. Whenever a sub-set of tiles are needed to match the first portion in the first image with a portion in the second image, the method retrieves from the first non-cache memory storage the sub-set of tiles and stores the retrieved sub-set of tiles in a second cache memory storage for rapid comparisons between the first portion and portions of the second image that are part of the retrieved sub-set of tiles. The retrieved sub-set of tiles is smaller than the entire set of tiles.

In some embodiments, the method determines that it needs a sub-set of tiles to be retrieved and stored in the second cache memory storage when the method identifies a location in the second image to search to identify a portion in the second image that matches the first portion, where this identified location corresponds to the sub-set of tiles. In some embodiments, the cache memory storage is a random access memory of a computer, while the non-cache memory storage is a non-volatile storage device of the computer. Also, the interblock processing method is an interblock encoding method in some embodiments, while it is an interblock decoding method in other embodiments. In addition, the set of tiles in some embodiments includes at least two horizontally adjacent tiles and at least two vertically adjacent tiles.

Some embodiments provide an interblock encoding method that encodes a first set of pixels in a first video image by selecting a first search pattern from a set of search patterns that each defines a pattern for examining portions of a second image that might match the first set of pixels. This encoding method adaptively selects the first search pattern in the set of search patterns, based on a set of criteria. The set of criteria in some embodiments includes the type of media of the video image.

## BRIEF DESCRIPTION OF THE DRAWINGS

The novel features of the invention are set forth in the appended claims. However, for purpose of explanation, several embodiments of the invention are set forth in the following figures.

**Figure 1** presents a process that conceptually illustrates the flow of an encoder that uses various novel pruning techniques to simplify its encoding process.
**Figure 2** illustrates a process that performs a two-stage motion motion-estimation operation to identify a motion vector that specifies the motion of a macroblock between one or two reference frames and a current frame.
**Figure 3** illustrates how some embodiments position the first search window about a location of the reference frame that corresponds to the location of the macroblock in the current frame.
**Figure 4** illustrates one manner of identifying a first search window location based on a predicted motion vector associated with a current-frame macroblock.
**Figure 5** illustrates an example of multiple starting points within a first search window.
**Figure 6** illustrates an example of a second stage search window.
**Figure 7** illustrates a refined motion estimation process that is performed to identify a set of partitions of pixels in the reference-frame that best matches a set of partitions of pixels of the current-frame macroblock.
**Figure 8** conceptually illustrates a search window with several location points.
**Figure 9** conceptually illustrates a process for searching for a partition of pixels for a reference-frame macroblock at multiple pixel level.
**Figure 10** conceptually illustrates several possible partition (i.e. block) sizes.
**Figure 11** conceptually illustrates several search locations for different pixel levels.
**Figure 12** conceptually illustrates a current-frame macroblock that is aligned with sub-pixel locations in a reference frame.
**Figure 13** conceptually illustrates several frames that include motion vectors that point to the same frame.
**Figure 14** conceptually illustrates how data about a set of pixels (e.g., integer, non-integer) may be stored in cache.
**Figure 15** illustrates a low-density search pattern within a search window.
**Figure 16** illustrates a higher density search pattern within a search window.
**Figure 17** illustrates an example of a search pattern that is biased in the vertical direction.
**Figure 18** illustrates an example of a search pattern that is biased in the horizontal direction.
**Figure 19** illustrates a process that selectively examines a sub-set of motion-estimation solutions in order to identify the ones for which it needs to compute an RD cost.
**Figure 20** illustrates a computer system with which some embodiments of the invention is implemented.

## DETAILED DESCRIPTION OF THE INVENTION

In the following detailed description of the invention, numerous details, examples and embodiments of the invention are set forth and described. However, it will be clear and apparent to one skilled in the art that the invention is not limited to the embodiments set forth and that the invention may be practiced without some of the specific details and examples discussed.

## I. OVERVIEW

Some embodiments of the invention provide novel interblock encoding and decoding process. These novel processes include: (1) a multi-stage motion estimation process, (2) an interpolation caching process for caching non-integer pixel location values of a reference frame, (3) a tile caching process for caching a sub-set of tiles of a reference frame, and (4) a motion estimation process that adaptively selects a search pattern to use for searching in the reference frame.

## A. Multi-Stage Motion Estimation

The multi-stage motion estimation process of some embodiments encodes a first set of pixels in a first image by reference to a second image in a video sequence. In a first search window within a second image, the motion estimation process searches to identify a first particular portion in the second image that best matches the first set of pixels in the first image. In the first search window within the second image, the motion estimation process identifies a first location corresponding to the first particular portion. In a second search window within the second image, the motion estimation process then searches to identify a second particular portion in the second image that best matches the first set of pixels in the first image, where the second search window is defined about the first location. In some embodiments, the first search is a coarse motion estimation process, while the second search is a refined motion estimation process. Furthermore, in some embodiments, the refined motion estimation process searches for variable block sizes.

**B. Interpolation Caching**

The encoder of some embodiments of the invention interblock encodes images in a video sequence. Each image in the video sequence has several of integer pixel locations, with each integer pixel location having at least one image value (e.g., a luminance value). The encoder selects a first image for encoding by reference to a second image. The encoder then identifies a set of non-integer pixel locations in the second image that match a set of pixels in the first image. This identification entails interpolating the image values associated with the non-integer pixel locations in the second image from the image values of several integer pixel locations in the second image. The encoder stores the interpolated image values of the non-integer pixel locations in an interpolation cache for later use during the encoding of a third image by reference to the second image.

The decoder of some embodiments of the invention uses a similar interpolation cache. Specifically, the decoder selects a first image for decoding by reference to a second image. The decoder then identifies a set of non-integer pixel locations in the second image that correspond to a set of pixels in the first image. The decoder then interpolates the image values associated with the non-integer pixel locations in the second image from the image values of several integer pixel locations in the second image. The decoder stores the interpolated image values of the non-integer pixel locations for later use during the decoding of a third image by reference to the second image.

**C. Tile Caching Process**

Some embodiments use a tile caching process in their interblock processes that process a first portion in a first image by reference to a second image in a sequence of video images. The caching process divides the second image into a set of tiles and stores the tiles in a first non-cache memory storage. Whenever a sub-set of tiles are needed to match the first portion in the first image with a portion in the second image, the caching process retrieves from the first non-cache memory storage the sub-set of tiles and stores the retrieved sub-set of tiles in a second cache memory storage for rapid comparisons between the first portion and portions of the second image that are part of the retrieved sub-set of tiles. The retrieved sub-set of tiles is smaller than the entire set of tiles.

In some embodiments, the caching process determines that it needs a sub-set of tiles to be retrieved and stored in the second cache memory storage when the caching process identifies a location in the second image to search to identify a portion in the second image that matches the first portion, where this identified location corresponds to the sub-set of tiles. In some embodiments, the cache memory storage is a random access memory of a computer, while the non-cache memory storage is a non-volatile storage device of the computer. Also, the interblock process is an interblock encoding process in some embodiments, while it is an interblock decoding process in other embodiments. In addition, the set of tiles in some embodiments includes at least two horizontally adjacent tiles and at least two vertically adjacent tiles.

**D. Adaptive Search Pattern**

The motion estimation process of some embodiments of the invention encodes a first set of pixels in a first video image by selecting a first search pattern from a set of search patterns that each defines a pattern for examining portions of a second image that might match the first set of pixels. The motion estimation process adaptively selects the first search pattern in the set of search patterns, based on a set of criteria. The set of criteria in some embodiments includes the type of media of the video image.

Before describing the above mentioned novel interblock encoding and decoding processes, the overall flow of an encoding process that includes the invention's interblock encoding process will be first described below.

**II. OVERALL FLOW**

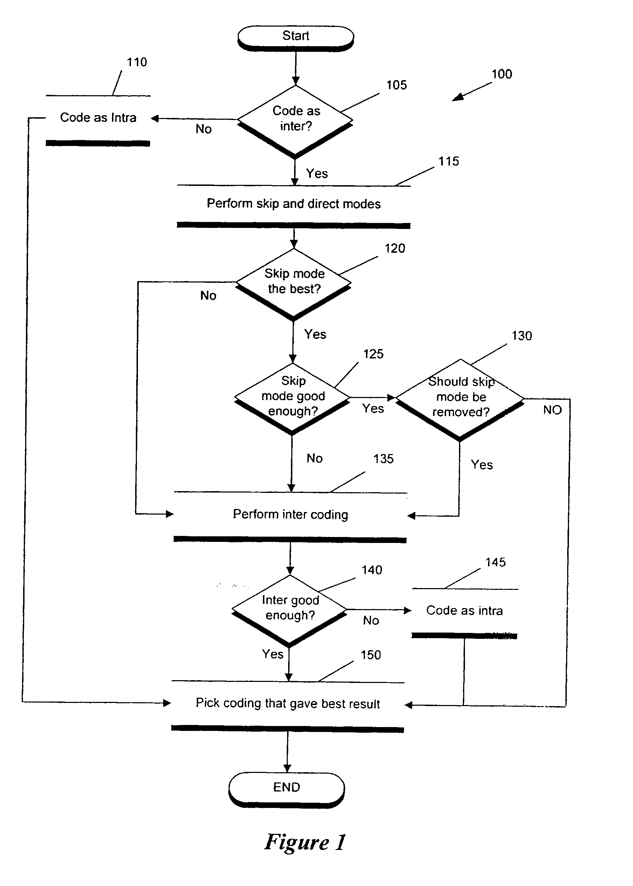

**Figure 1** presents a process 100 that conceptually illustrates the flow of an encoder that uses various novel pruning techniques to simplify its encoding process. Some embodiments do not use all the pruning techniques described in this section. Also, some embodiments use these pruning techniques in conjunction with a multi-stage motion estimation operation which will be described below in section II.

As shown in **Figure 1**, the process 100 starts by determining (at 105) whether to forego encoding the macroblock as an interblock. In some embodiments, the process foregoes interblock encoding under certain circumstances. These circumstances include the placement of the encoder in a debugging mode that requires coding each frame as an intrablock, the designation of an intrablock refresh that requires coding several macroblocks as intrablocks, the realization that intrablock encoding will be chosen at the end, the realization that too few macroblocks have been intrablock encoded, or some other designation that requires the macroblock to be coded as an intrablock.

When the process 100 determines that it does not need to encode the macroblock as an interblock, then it transitions to 110. At 110, the process encodes the macroblock as an intrablock. Various novel schemes for performing the intrablock encoding are described in United States Patent Application entitled "Selecting Encoding Types and Predictive Modes for Encoding Video Data" having Attorney Docket APLE.P0078 (the "Intrablock Encoding Application"). This United States Patent Application is herein incorporated by reference.

One the process encodes (at 110) the macroblock as an intrablock, it transitions to 150 to designate the encoding solution. In this instance, the process designates the result of its intracoding at 110, as this is the only encoding that the process 100 has explored in this path through the flow. After 150, the process 100 ends.

Alternatively, when the process 100 determines (at 105) that it should not forego (i.e., prune) the interblock encoding, the process performs (at 115) the skip mode encoding of the macroblock, and, if necessary, the direct mode encoding of the macroblock. In skip mode encoding, the macroblock is coded as a skipped macroblock; on the decoder side, this macroblock will be decoded by reference to the motion vectors of the surrounding macroblocks and/or partitions within the surrounding macroblocks. Skip mode encoding is further describes in United States Patent Application entitled "Pruning During Video Encoding" filed concurrently, having Attorney Docket APLE.P0073 (the "Pruning Application"). This United States Patent Application is herein incorporated by reference. Direct mode encoding is similar to skip mode encoding, except that in direct mode encoding some of the macroblock's texture data is quantized and sent along in the encoded bit stream. In some embodiments, direct mode encoding is done for B-mode encoding of the macroblock. Some embodiments might also perform direct mode encoding during P-mode encoding.

After 115, the process 100 determines (at 120) whether the skip mode encoding resulted in the best encoding solution at 115. This would clearly be the case when no direct mode encoding is performed at 115. On the other hand, when direct mode encoding is performed at 115, and this encoding resulted in a better solution than the skip mode encoding, then the process transitions to 135 to perform intercoding, which will be described below.

However, when the process determines (at 120) that the skip mode encoding resulted in the best result at 115, the process determines (at 125) whether the skip mode encoding was sufficiently good to terminate the encoding. One method of making such a determination is described in the above-incorporated Pruning Application.

If the process determines (at 125) that the skip mode encoding was good enough, the process 100 transitions to 130, where it determines whether the skip mode encoding solution should be discarded. Some embodiments judge solutions based on an encoding cost, called the rate-distortion cost (RD cost). As further described below in section II, the RD cost of an encoding solution often accounts for the distortion in the encoded macroblock and counts the actual bits that would be generated for the encoding solution. Skip mode solutions can sometimes have great RD costs but still be terrible solutions. This is because such solutions have very small rate costs, and such rate costs at times skew the total RD costs by a sufficient magnitude to make a poor solution appear as the best solution.

Accordingly, even after selecting a skip mode encoding solution at 125, the process 100 determines (at 125) whether it should remove the skip mode solution. In some embodiments, the criterion for making this decision is whether the distortion for the skip-mode encoding of the current macroblock is greater than two times the maximum distortion of the adjacent neighboring macroblocks of the current macroblock.

If the process determines (at 130) that the skip-mode solution should not be removed, it transitions to designate the encoding solution. In this instance, the process designates the result of skip-mode encoding. After 150, the process 100 ends. On the other hand, when the process 100 determines (at 130) that the skip-mode encoding solution should be removed, it transitions to 135. The process also transitions to 135 when it determines (at 125) that the skip mode solution is not sufficiently good enough to terminate the encoding.

At 135, the process examines various interblock encodings. In some embodiments, the process 100 might explore various macroblock and sub-macroblock encodings (e.g., 16x16, 8x16, 16x8, 8x8, 8x4, 4x8, and 4x4 B-mode and P-mode encodings), which are further described below in section II. However, as described in the above-incorporated Pruning Application, some embodiments speed up the interblock encoding process by pruning (i.e., foregoing) the exploration and/or analysis of some of the macroblock or sub-macroblock encoding modes.

After performing the interblock encoding at 135, the process determines (at 140) whether the interblock encoding of the macroblock is good enough for it to forego the intrablock encoding of the macroblock. Different embodiments make this decision differently. Some of these approaches are further describes below in section 11.

If the process 100 determines (at 140) that the intrablock encoding should be performed, then it transitions to 145, where it performs this encoding. As mentioned above, several novel features of this process' intrablock encoding are described in the above-incorporated Intrablock Encoding Application. After 145, the process transitions to 150. The process also transitions to 150 when it determines (at 140) that it should forego the intrablock encoding.

As mentioned above, the process designates (at 150) the encoding solution for the macroblock. When the process 100 identifies multiple encoding solutions during its operations prior to 150, the process picks (at 150) one of these solutions. In some embodiments, the process 100 picks the solution that has the best RD cost.

Several examples of RD cost are provided below. After 150, the process ends.

### III. INTERBLOCK ENCODING

#### A. Multi-Stage Motion Estimation

As mentioned above, some embodiments use a multi-stage motion estimation operation in conjunction with the process 100 illustrated in **Figure 1**. In some embodiments, a multi-stage motion estimation operation is performed when a macroblock is interblock encoded. As will be described below, some multi-stage motion estimation operations include coarse and refined motion estimations. In some embodiments, the process 100 is performed after an initial coarse motion estimation operation. However, one of ordinary skill in the art will realize the initial coarse motion estimation operation may also be performed during the process 100 (e.g., between steps 105 and 115, at step 140).

#### 1. Overall Flow

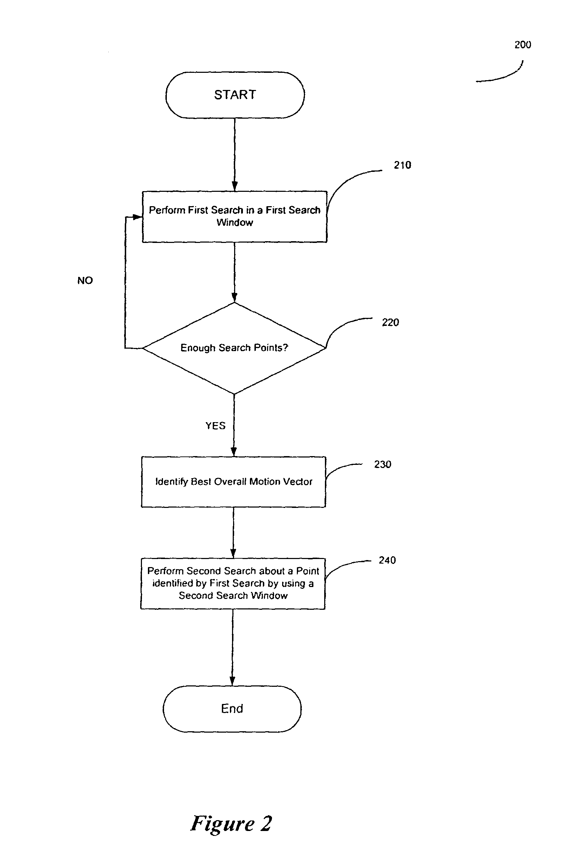

**Figure 2** illustrates a process that performs a multi-stage motion-estimation operation to identify a motion vector that specifies the motion of a macroblock between one or two reference frames and a current frame. In order not to obscure the discussion of the invention's multi-stage motion estimation operation, the process 200 is described below in terms of finding a position of a current-frame macroblock in a single reference frame. However, one of ordinary skill will realize that this process often explores two reference frames to identify the best motion-estimation encoding of a macroblock.

The first stage of this process is a coarse search (e.g., coarse motion estimation) that identifies a rough approximation of the position of the current-frame macroblock in the reference frame, while the second stage is a more refined search (e.g., refined motion estimation) that identifies a more accurate approximation of the position of the current-frame macroblock in the reference frame.

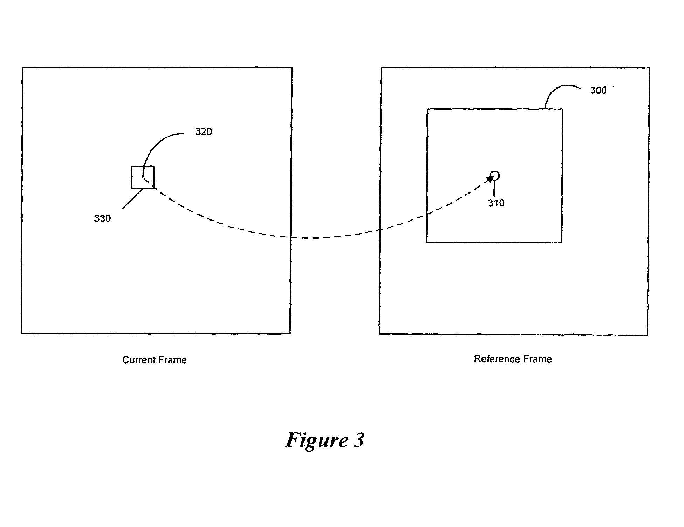

The process initially performs (at 210) a first search of the reference frame for a macroblock that best matches the current-frame macroblock. The first search is performed within a first search window within the reference frame. Different embodiments identify the location of a first search window differently. For instance, as shown in **Figure 3**, some embodiments position the first search window 300 about a location 310 of the reference frame that corresponds to the location 320 of the macroblock 330 in the current frame.

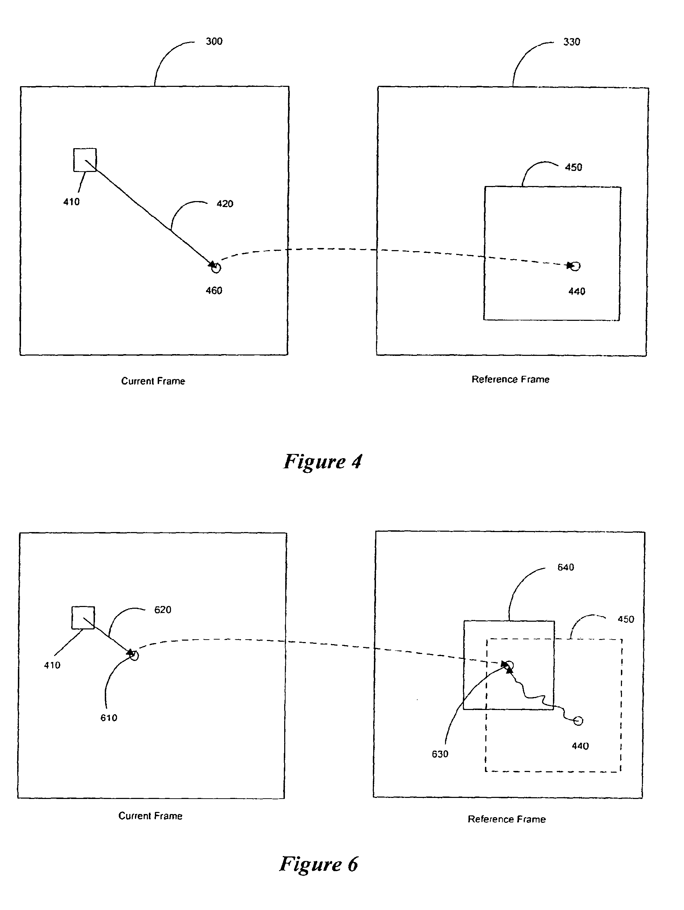

Other embodiments position the first search window at a predicted location of the current-frame macroblock in the reference frame. **Figure 4** illustrates one manner of identifying a first search window location based on a predicted motion vector associated with a current-frame macroblock. **Figure 4** illustrates a current-frame macroblock 410 in a current frame 400. This figure also illustrates a predicted motion vector 420 that is associated with the current-frame macroblock 410. This predicted motion vector 420 can be computed based on the motion vectors of the macroblocks that neighbor the current-frame macroblock 410 in the current frame. As shown in **Figure 4,** the predicted motion vector 420 points to a location point 460 in the current frame 400 that corresponds to a location 440 in the reference frame 430. Accordingly, as further shown in **Figure 4**, some embodiments position the first search window 450 in the reference frame 430 about the location point 440.

The process 200 performs (at 210) a coarse search within the first search window, in order to try to identify a motion vector that specifies how much the current-frame macroblock has moved since it appeared in the reference frame. The process can identify this motion vector by searching for a reference-frame macroblock in the first search window that most closely matches the current-frame macroblock. The process does not necessarily look at all the reference-frame macroblocks within the search window, but just enough to determine one that falls within certain pre-determined parameters.

Once the process has identified enough reference-frame macroblocks, it identifies (at 210) the best reference-frame macroblock that it encounters during this coarse search. It then uses (at 210) the identified best reference-frame macroblock to specify the motion vector that indicates a rough approximation of the location of the current-frame macroblock in the reference frame.

After 210, the process determines (at 220) whether it has performed enough iterations of the coarse search in the first search window. Some embodiments perform only one search within this window. In such embodiments, the process 200 does not need to make the determination at 220, and instead proceeds directly from 210 to 230. Alternatively, other embodiments perform multiple searches that start at multiple different points within this window.

When the process 200 determines (at 220) that it should perform another coarse search within the first search window, the process loops back to 210 to perform another search (within this window) that starts at a different location than the other previous coarse searches that were performed at 210 for the macroblock.

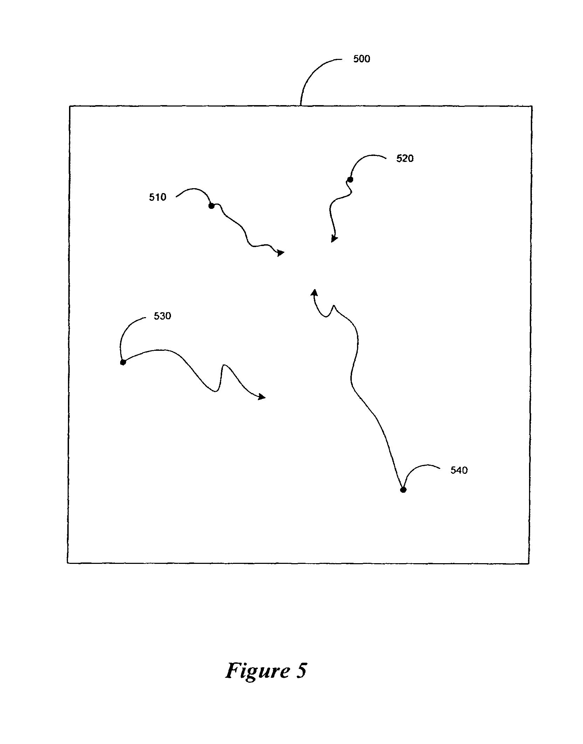

**Figure 5** illustrates an example of multiple starting points within a first search window. Specifically, the figure illustrates four starting points 510-540 within a first search window 500. Each starting point 510-540 results in the search identifying different reference-frame macroblocks. In some embodiments, different starting points may identify the same reference-frame macroblocks.

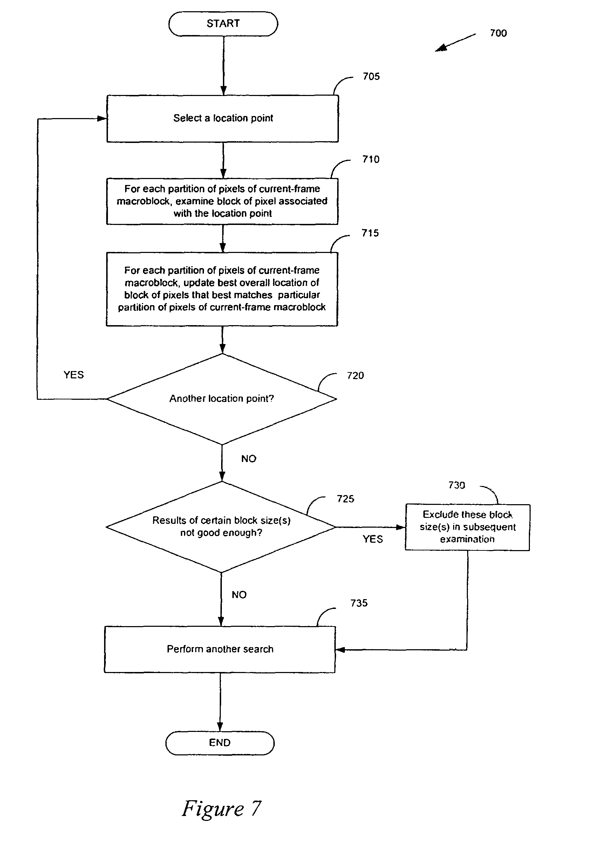

Once the process determines (at 220) that it has performed enough iterations of the coarse search in the first search window, it identifies (at 230) the best possible coarse-stage solution that it identified through its one or more iterations through 210. This solution identifies a motion vector 620 that identifies a location 610 for the macroblock 410 in the current frame that corresponds to a location 630 in the reference frame, as shown in **Figure 6.**

Next, the process performs (at 240) a second refined motion-estimation search for a reference-frame macroblock that matches the current-frame macroblock. The second search is performed within a second search window of the reference frame. In some embodiments, this second search window is smaller than the first search window used during the coarse first-stage search at 210. Also, in some embodiments, the second search window is defined about the location in the reference frame that is identified by the motion vector produced by the first stage search (i.e., by the motion vector selected at 230). **Figure 6** illustrates an example of such a second stage search window. Specifically, this figure illustrates a second search window 640 about the location point 630 that was specified in a first search.

In some embodiments, the search process used during the second search stage (at 240) is much more thorough than the search process used during the first search stage. For instance, some embodiments use an exhaustive sub-macroblock search that uses rate distortion optimization during the second stage, while using a simpler three-step search during the first search stage.

At the end of the second search stage at 240, the process 200 provides a motion vector that specifies how much the current-frame macroblock has moved since it appeared in the reference frame. After 240, the process ends.

*2. Refined Motion Estimation*

**Figure 7** illustrates a refined motion estimation process 700 that is performed to identify a set of partitions of pixels in the reference-frame that best matches a set of partitions of pixels of the current-frame macroblock. In some embodiments, the process 700 is implemented during the second search (at 240) of the process 200.

As shown in this figure, the process 700 selects (at 705) a location point within a search window. In some embodiments, the search window is initially defined about the reference-frame macroblock identified at 230 of the process 200.

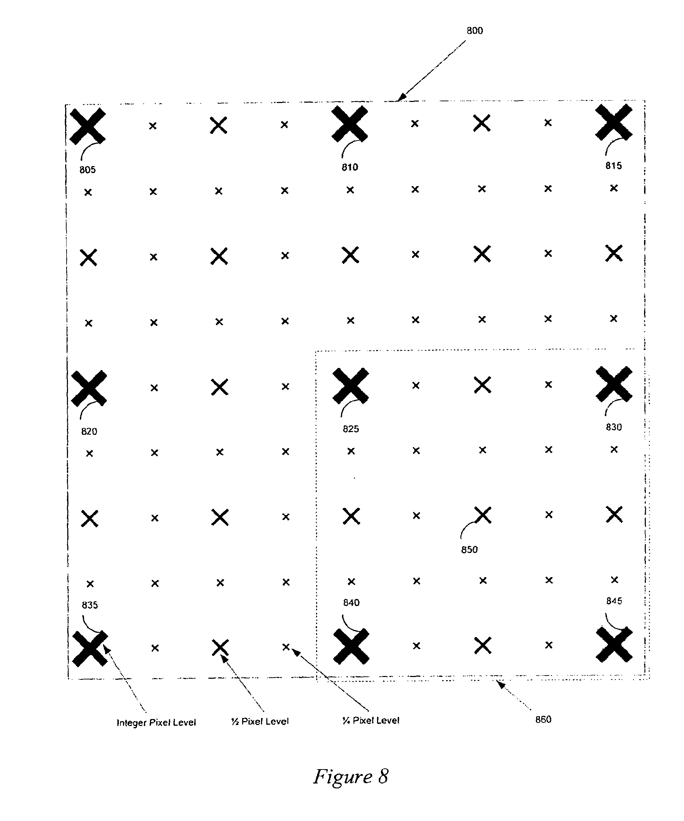

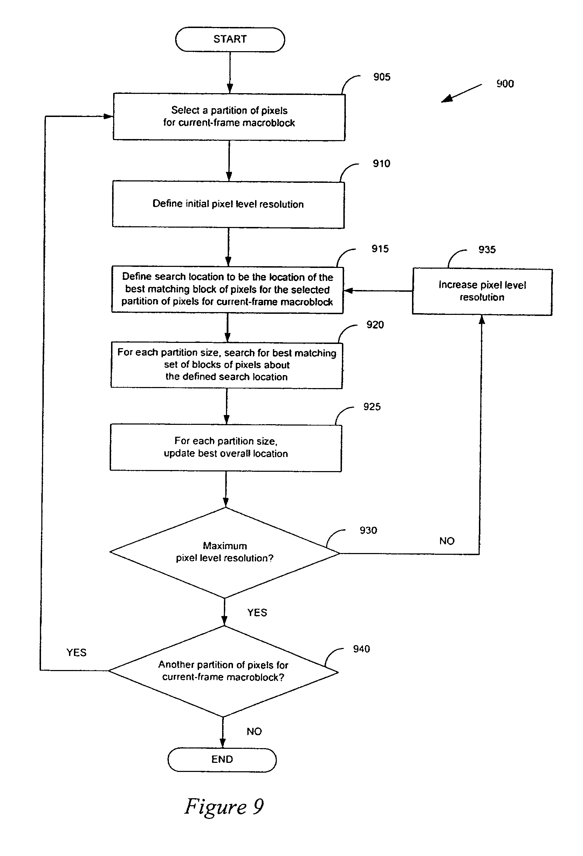

**Figure 8** conceptually illustrates a search window 800 with several location points. As shown in this figure, the search window 800 includes nine location points 805-845. In some embodiments, these locations points 805-845 may be randomly generated. In other embodiments, these location points 805-845 are predetermined by a set of criteria. Each of these location points 805-845 corresponds to a reference-frame macroblock at the integer pixel level. Moreover, **Figure 8** illustrates location points at non-integer pixel levels (i.e., sub pixel level), such as location points at half and quarter pixel levels. The use of these sub pixel level location points will further be described by reference to **Figure 9.**

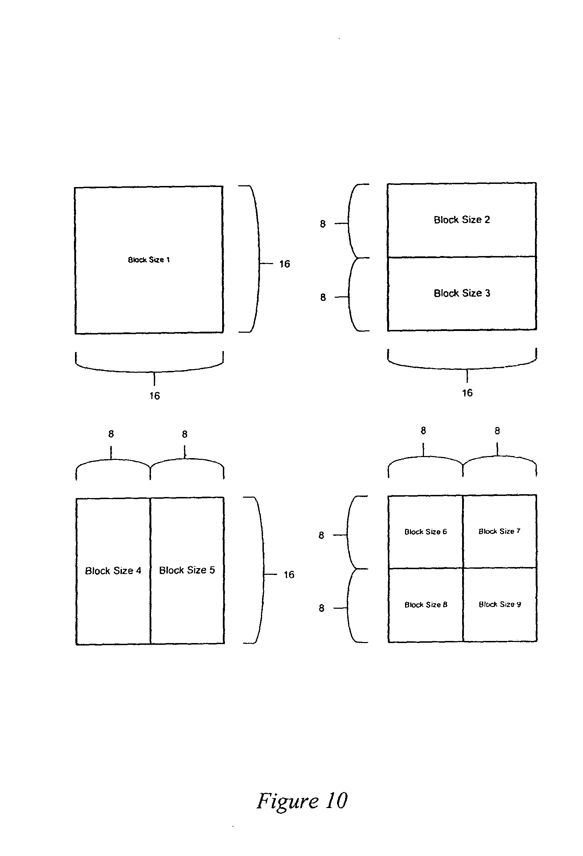

Next, for each possible partition of pixels within the current-frame macroblock, the process 700 examines (at 710) how closely a particular partition of pixels at the selected location point, matches a partition of pixels of the current-frame macroblock. **Figure 10** conceptually illustrates several possible partition (i.e. block) sizes. Specifically, this figure illustrates nine possible block sizes, where each block size represents a particular block of pixels. For instance, block size 1 represents a block of pixels that includes a 16x 16 array of pixels. Block size 2 represents a block of pixels that include a 16x8 array of pixels. Althaugh this figure illustrates only nine block sizes, the process 700 may search for block sizes with other pixel configurations. Some embodiments search for all of these block sizes, while other embodiments may only search for some of these block sizes.

Once the examination has been performed (at 710), the process 700 updates (at 715) the best location the reference-frame macroblock for each block size. The process 700 determines (at 720) whether there is another location point. If so, the process 700 proceeds to 705 to select another location point and performs another iteration of steps 710-720.

Once the process 700 determines (at 720) that there are no more location points, the process 700 determines (at 725) whether the search results for certain block sizes are good enough. In some embodiments, a search result is good enough if the block size with the updated location meets a certain criterion (e.g., SAD below a certain threshold value). In some embodiments, a search result is not good enough if the difference between a cost associated with a particular block size and a cost associated with a block size having the lowest cost, is greater than a threshold value. In some embodiments, the threshold value is dynamically defined during the search. If the process 700 determines (at 725) the search results for certain block sizes are not good enough, the process 700 excludes (at 730) these block sizes in any subsequent searches.

After excluding (at 730) these block sizes or after determining (at 725) that all the search results are good enough, the process 700 performs (at 735) another search. During this search, for each block size, the process 700 searches for a partition of pixels in the reference frame that best matches the partition of the current-frame macroblock. This search includes searching for a partition of pixels at the sub-pixel level. This sub-pixel level search will be further described below. After searching (at 735), the process 700 ends.

### 3. Searching at Sub Pixel Level

**Figure 9** conceptually illustrates a process 900 for searching for a partition of pixels for a reference-frame macroblock at multiple pixel level. In some embodiments, the process 900 is performed during the search 735 of the process 700. As shown in this figure, the process 900 selects (at 905) a partition of pixels for a current-frame macroblock (i.e., selects a block size). The process 900 iterates through 905 several times. In its iterations through 905, the process in some embodiments iteratively selects the partitions (i.e., the blocks) that were not discarded at 730 sequentially based on their numerical designations, which are illustrated in **Figure 10**. For instance, when none of the partitions are discarded at 730, the process 900 selects blocks 1 to 9 in sequence.

After 905, the process 900 defines (at 910) an initial pixel resolution (e.g., pixel level) of the search (i.e., defines search granularity). For instance, the process 900 may initially define the pixel resolution to be every other location at the integer pixel (i.e., half resolution of the integer pixel level resolution). Next, the process 900 defines (at 915) the search location to be the best location identified thus far for the selected partition of the current-frame macroblock. This best-identified location might be identified during the pixel level search of process 700 of **Figure 7**, or, as further described below, might be identified during any of the pixel resolution searches of process 900 of **Figure 9**.

For each particular current-frame partition that was not discarded at 730, the process 900 (at 920) (1) examines reference-frame partitions that are about the search location identified at 915 at the defined pixel level resolution (i.e. search granularity), and (2) identifies a particular examined reference-frame partition that best matches the current-frame partition.

Next, for each particular current-frame partition that was not discarded at 730, the process 900 (at 925) determines whether the particular reference-frame partition identified at 920 for the particular current-frame partition is a better match than the previously identified best match for the particular current-frame partition. If so, the process defines (at 925) the location of the particular reference-frame partition identified at 920 as the best location for the particular current-frame partition.

Next, the process 900 determines (at 930) whether it has examined the reference frame at the maximum pixel level resolution for the selected partition. If not, the process 900 increases (at 935) the pixel level resolution to the next pixel level resolution (e.g., half, quarter) and transitions back to 915, which was described above. Thus, in subsequent iterations of steps 915-935, the process 900 examines partitions of the current-frame macroblock at the sub pixel level (e.g., half, quarter).

When the process 900 determines (at 930) that it has examined the reference frame at the maximum pixel level resolution for the selected partition, the process 900 determines (at 940) whether it has examined all the current-frame partitions that were not discarded at 730. If not, the process 900 returns to 905 to select the next current-frame partition and then repeats 910-935 for this partition. The process 900 ends once it determines (at 940) that it has examined all partitions of pixels that were not discarded at 730.

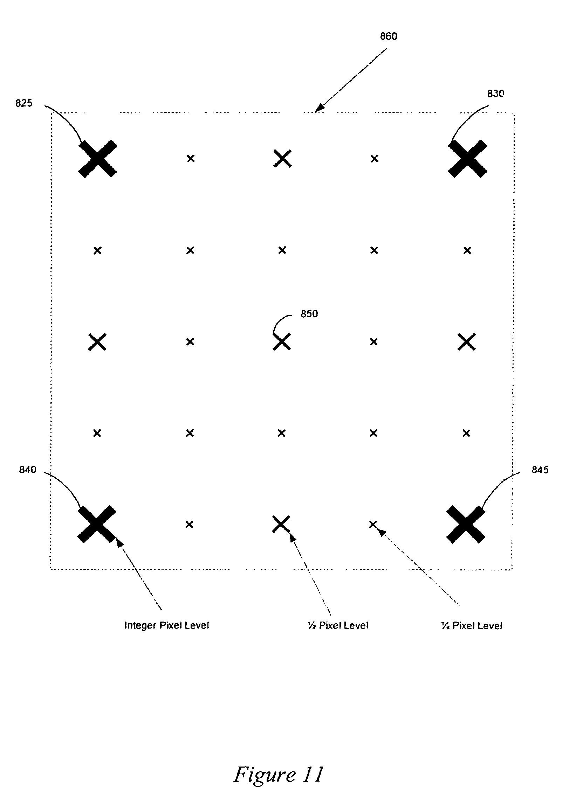

**Figure 11** conceptually illustrates several search locations for different pixel levels. Specifically, this figure illustrates a search area 860 that is bounded by four integer pixel level locations 825-830 and 840-845. In some embodiments, this bounded search area 860 is located within the search window 800, as shown in **Figure 8**.

Within the bounded search area 860 are five half pixel level locations. Furthermore, within this bounded search area 860 are sixteen quarter pixel level locations. Different embodiments may specify different bounded search areas that include more or fewer integer and non-integer locations. Some embodiments may search in and around this bounded area 860 during the search at 920, when the process 900 defines (at 915) the search location to be location 850.

In some embodiments, several iterations of the above described steps are performed. As described above, some embodiments perform separate searches for each pixel level. However, one skilled in the art will realize that some embodiments may search for several block sizes at different pixel levels concurrently for each search location (i.e., for each location, search concurrently at integer, half and quarter pixel levels for all block sizes). Although, the sub pixel levels are described as half and quarter pixel levels, one skilled in the art will realize that a sub pixel level can be any non-integer pixel level.

Additionally, the process 700 describes determining (at 725) whether the search results for certain block size(s) are good enough. In some embodiments, this determination 725 can also be made during the process 900. Furthermore, one skilled in the art will realize that this determination 725 can be made during different steps of the processes 700 and 900. For instance, such a determination process 725 can be made after finding the best location of each block size.

Moreover, some embodiments might not perform the search at 735 during the process 700. Additionally, the above processes 700 and 900 describe performing searches for a reference-frame macroblock, however, one skilled in the art will realize that the processes 700 and 900 can be used to search other types of pixel array (e.g., 16x8 sub-macroblocks).

### B. Caching Interpolation Values

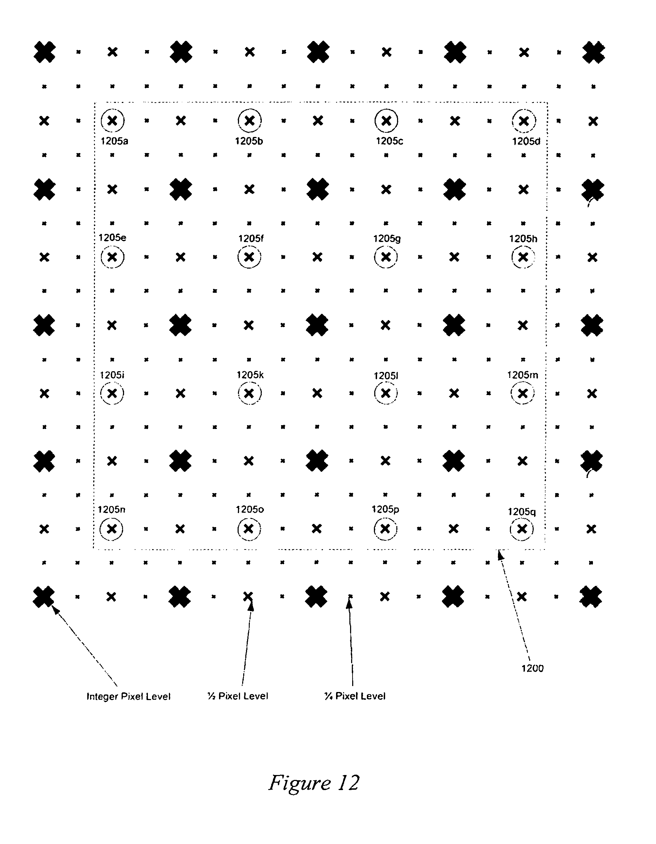

**Figure 12** conceptually illustrates several pixel and sub-pixel locations in a reference frame. These sub-pixel locations include half and quarter pixel locations.

As further shown in this figure, a current frame macroblock 1200 is aligned with quarter sub-pixel locations 1205 (i.e., the pixel locations in the current frame macroblock line up with quarter sub-pixel locations in the reference frame).

As mentioned above, the encoder examines macroblocks or macroblock partitions that are aligned with sub-pixel locations (i.e., that are not aligned with pixel locations) in a reference frame during the motion estimation operation of some embodiments. From the reference frame, the decoder of some embodiments might also have to retrieve in some instances macroblocks or macroblock partitions that are aligned with sub-pixel locations (i.e., that are not aligned with pixel locations).

The examination and retrieval of the macroblocks or macroblock partitions that are aligned with sub-pixel locations requires the encoder or decoder to generate image values (e.g., luminance values) for the reference frame at the sub-pixel locations, which correspond to pixel locations in the current frame during a decoding operation, and which need to be compared to pixel locations in the current frame during an encoding operation.

In some embodiments, generating the image values that correspond to sub-pixel locations entails interpolating the image values from the images values of neighboring pixel locations (i.e., deriving the image value for a sub-pixel location from the image values of pixel locations). In many instances, interpolating an image value for a sub-pixel location is a difficult operation (e.g., computationally expensive operation) that entails more than a simple averaging of the image values of the two closest neighboring pixel locations. Thus, some embodiments store the interpolated image value for a sub-pixel location in a cache, which can easily be retrieved when a subsequent search of another current frame partition tries to examine the above mentioned interpolated image value for the sub-pixel location. Some embodiments store all interpolated values in a cache, while other embodiments store only some of the interpolated values in a cache.

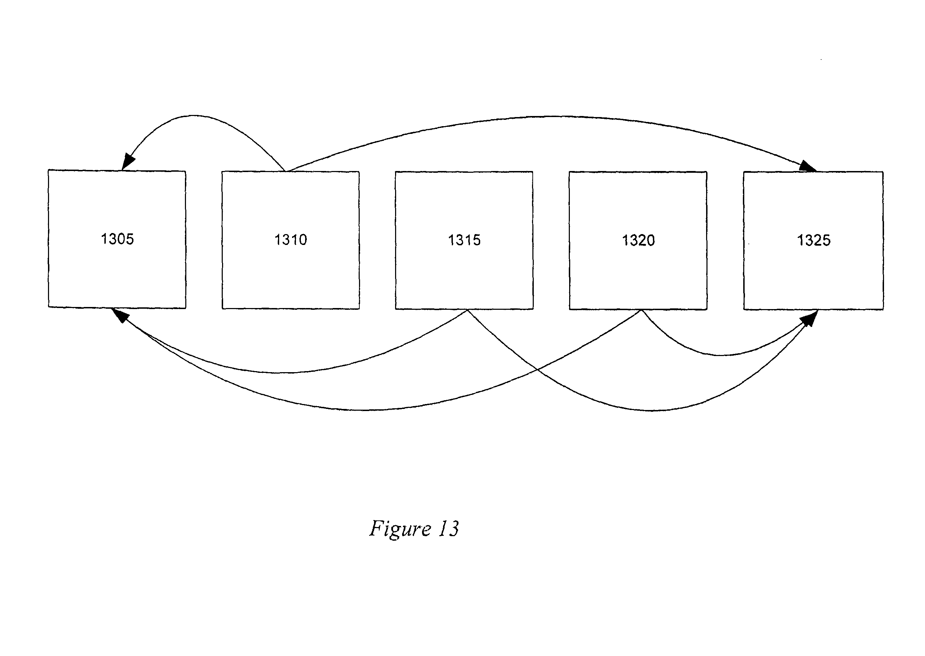

During the encoding and/or decoding operations, many motion vectors for a set of current-frame macroblocks will point to the same reference frame. For instance, as shown in **Figure 13,** the frame 1310 has motion vectors that are defined by reference to the frames 1305 and 1325. Furthermore, both frames 1315 and 1320 have motion vectors that are defined by reference to frame 1305. Therefore, in some instances, a reference frame may be used by to encode or decode more than one other frame. Accordingly, it is advantageous to cache all or some sub-pixel values that are interpolated for a reference frame, as they may be used for the encoding of other frames.

### C. *Cache Tiling*

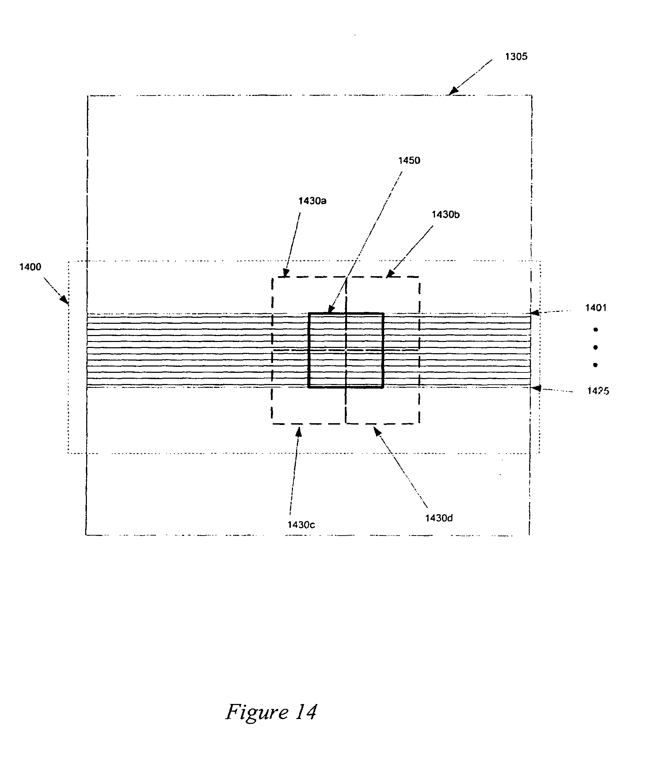

**Figure 14** conceptually illustrates a method for storing a reference frame in a cache. In some embodiments, this method is implemented in conjunction with the interpolation operation described above. As shown in this figure, a reference frame 1305 is divided into several tiles 1430. In some embodiments, the frame 1305 is divided in such a way as to include two or more columns of tiles and two or more rows of tiles.

**Figure 14** further illustrates a pixel block 1450, which may or may not be aligned with the pixel locations in the reference frame. The pixel block 1450 represents a portion of the reference frame that is examined during an encode operation (i.e., during motion estimation) or that is to be retrieved during a decode operation.

As shown in **Figure 14**, portions of tiles 1430a-1430d are needed to examine or to retrieve the pixel block 1450. Hence, to facilitate the examination of pixel blocks (such as pixel block 1450) during an encode or a decode operation, some embodiments cache the reference frame 1305 in terms of its tiles. In other words, instead of caching rows of pixels (e.g., pixel rows 1401-1425 that contain the pixel block 1450) that span across the reference frame 1305, some embodiments only cache tiles within the reference frame.

When a set of tiles are needed for the analysis of a particular pixel block, the encoder or decoder of these embodiments determines whether all the tiles that the particular pixel block overlaps are in the cache. If so, the encoder or decoder uses the cached tiles to process the particular pixel block. If not, the encoder or decoder (I) retrieves from a non-cache storage the desired tiles (i.e., the tiles that have an overlap with the particular pixel block but are not currently in the cache), (2) stores these tiles in the cache, and then (3) uses these tiles to process the particular pixel block. For instance, when trying to process pixel block 1450, the encoder or decoder determines that this block overlaps tiles 1430a-1430d. Hence, the encoder or decoder pulls these tiles 1430a-1430d into the cache (if they are not there already) and then uses these tiles to process the block 1450.

In some embodiments, the cache storage is the cache of a processor of the computer system used to perform the encoding or decoding operations. In other embodiments, the cache storage is a dedicated section of the volatile memory (e.g., the random access memory) of the computer system used to perform the encoding or decoding operations. Also, even though **Figure 1414** illustrates square-shaped tiles for caching, some embodiments might use other shapes for their tiles, such as rectangles.

### D. *Adaptive Search Pattern for Motion Estimation*

Some embodiments use different search criteria to perform searches during the multi-stage motion estimation operation described above. Some embodiments use a fix search pattern when performing searches. Other embodiments may use different search patterns. For instance, some embodiments adaptively select the search pattern based on certain criteria.

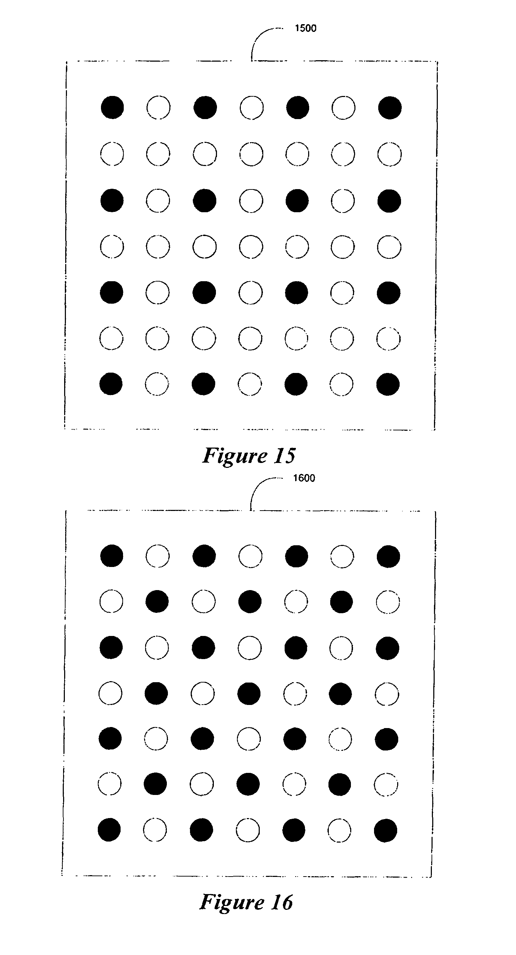

One example is selecting between a low-density and high-density search pattern. **Figure 15** illustrates a low-density search pattern within a search window 1500. This figure illustrates the search pattern in terms of black circles that represent locations that the pattern specifies for searching. As shown in **Figure 15,** the search pattern only specifics sixteen locations for searching, out of forty-nine potential macroblock locations (identified by the black and white circles) that can be examined. **Figure 16** illustrates a higher density search pattern within a search window 1500. The search pattern in this figure specifies twenty-five locations for searching, out of forty-nine potential macroblock locations (identified by the black and white circles) that can be examined.

Some embodiments might adaptively select between the search patterns illustrated in **Figures 15** and **16** based on the desired encoding result. For instance, some embodiments might use the higher density pattern illustrated in **Figure 16** for higher-resolution encodings (e.g., HD television encoding), while other embodiments might use the lower density pattern illustrated in **Figure 15** for streaming, real-time video carried through the net.

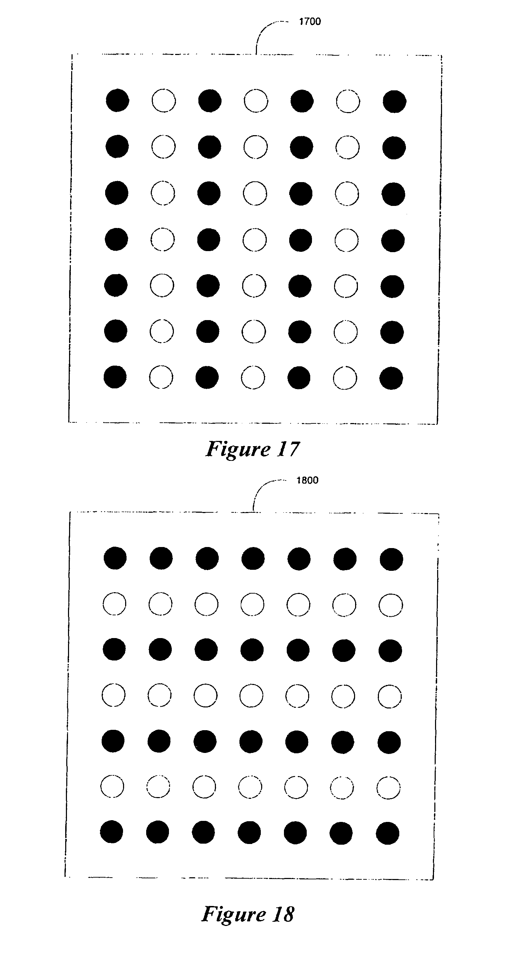

Alternatively, some embodiments use a search pattern that emphasizes vertical search movements, while other embodiments use a search pattern that emphasizes horizontal search movements. **Figure 17** illustrates an example of a search pattern in a search window that is centered about the predicted macroblock location. This search pattern is biased in the vertical direction. Given a limited number of locations that it can explore, the pattern illustrated in **Figure 17** expends the encoder's limited search budget to examine locations that are in vertical columns about the predicted macroblock location at the center of the search window 1500.

**Figure 18** illustrates an example of a search pattern in a search window that is centered about the predicted macroblock location. This search pattern is biased in the horizontal direction. Given a limited number of locations that it can explore, the pattern illustrated in **Figure 18** expends the encoder's limited search budget to examine locations that are in horizontal rows about the predicted macroblock location at the center of the search window 1500.

Some embodiments adaptively select between the two patterns illustrated in **Figures 17** and **18** based on the vectors of the neighboring macroblocks. If most or all of them point in a particular direction (e.g., the vertical or horizontal direction), then these embodiments select the patterns illustrated in **Figure 17** or **18.** Some embodiments determine whether the motion vector's of the neighboring macroblocks point in a particular direction by determining whether the absolute value of the motion vector along one direction (e.g., the y-axis) is bigger than the absolute value of the motion vector along the other direction (e.g., the x-axis). Some embodiments not only consider the directions of the motion vectors of the neighboring macroblocks, but also consider the magnitudes of these vectors. Some embodiments also consider a motion field of a set of images (e.g., whether the set of images illustrates movement in a particular direction) in adaptively selecting a search pattern.

### E. RD Cost Calculations

As mentioned above, some embodiments of the invention compute a cost for a particular macroblock during a motion estimation operation, such as a rate distortion ("RD") cost. Generating a rate-distortion cost for all possible modes during motion estimation is computationally intensive. This is especially so given that this cost often entails measuring the distortion and counting of the actual bits that would be generated. Accordingly, some embodiments do not compute RD cost for all possible modes. Instead, these embodiments pare down the number of possible modes by rank ordering the motion-estimation solutions, selecting the top N motion-estimation solutions, and then computing the RD cost for the selected solutions.

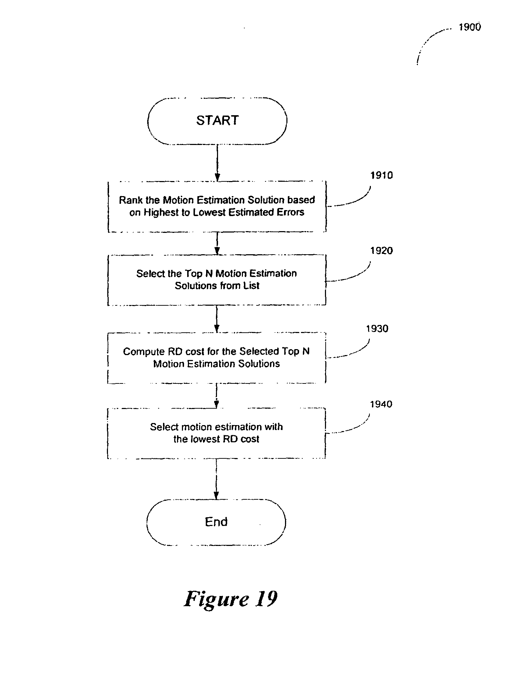

**Figure 19** illustrates a process 1900 of some embodiments of the invention. This process selectively examines a sub-set of motion-estimation solutions in order to identify the ones for which it needs to compute an RD cost. In some embodiments, a number of encoding solutions have been computed before this process starts. Other embodiments perform this process in conjunction with the encoding solutions.

The process 1900 initially ranks (at 1910) the encoding solution based on the lowest to highest estimated errors. In some embodiments, each encoding solution not only generates a motion vector but also generates an estimated error. Different embodiments use different metric computations to quantify the error. For instance, some embodiments use the mean absolute difference ("MAD") metric score, while others use the sum of absolute differences ("SAD") metric score, which are described in the above-incorporated Pruning application. Yet other embodiments use a combination of two or more metric scores.

Next, the process selects (at 1920) the top N encoding solutions from the ranked list. In some embodiments, the value of N is a predefined number, while in others it is a number that is dynamically generated. Next, the process computes (at 1930) the RD cost for the selected top-N results, selects (at 1940) the encoding solution with the lowest RD cost, and then terminates.

Some embodiments express the RD cost of an encoding solution as:

$$RdCost = Distortion\ Cost + (\lambda \times NB),$$

where $\lambda$ is the weighting factor, and NB is the number of bits generated because of the encoding. This RdCost quantifies the amount of data that has to be transmitted and the amount of distortion that is associated with that data.

Instead of computing a simple RD cost, some embodiments compute (at 2330) a cost that not only factors the RD cost but also factors the complexity of decoding the given mode for which the encoding solution was generated. This cost can be expressed as:

$$Complex\ RD = RdCost + \alpha(cf),$$

where RdCost is as computed in the above specified equation, $\alpha$ is the importance factor associated with the decoding complexity, and of is a complexity factor that quantifies the amount of decoding that is performed on the data.

After 1930, the process selects (at 1940) the motion-estimation solution that resulted in the lowest cost calculated at 1930, and then ends. By initially ranking the motion estimation operation by an initial metric score and only quantifying a cost metric to those encoding solutions with the lowest initial metric score, the process 1900 ensures that it finds an acceptable result in the fastest possible way.

## IV. COMPUTER SYSTEM

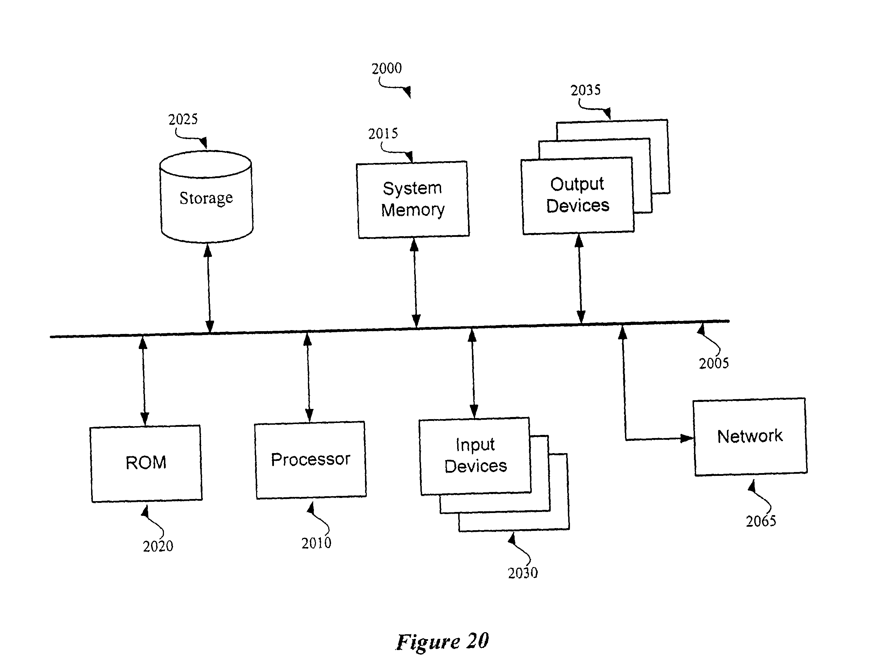

**Figure 20** conceptually illustrates a computer system with which some embodiments of the invention is implemented. Computer system 2000 includes a bus 2005, a processor 2010, a system memory 2015, a read-only memory 2020, a permanent storage device 2025, input devices 2030, and output devices 2035.

The bus 2005 collectively represents all system, peripheral, and chipset buses that support communication among internal devices of the computer system 2000. For instance, the bus 2005 communicatively connects the processor 2010 with the read-only memory 2020, the system memory 2015, and the permanent storage device 2025.

From these various memory units, the processor 2010 retrieves instructions to execute and data to process in order to execute the processes of the invention. The read-only-memory (ROM) 2020 stores static data and instructions that are needed by the processor 2010 and other modules of the computer system. The permanent storage device 2025, on the other hand, is a read-and-write memory device. This device is a non-volatile memory unit that stores instruction and data even when the computer system 2000 is off. Some embodiments of the invention use a mass-storage device (such as a magnetic or optical disk and its corresponding disk drive) as the permanent storage device 2025. Other embodiments use a removable storage device (such as a floppy disk or zip® disk, and its corresponding disk drive) as the permanent storage device.

Like the permanent storage device 2025, the system memory 2015 is a read-and-write memory device. However, unlike storage device 2025, the system memory is a volatile read-and-write memory, such as a random access memory. The system memory stores some of the instructions and data that the processor needs at runtime. In some embodiments, the invention's processes are stored in the system memory 2015, the permanent storage device 2025, and/or the read-only memory 2020.

The bus 2005 also connects to the input and output devices 2030 and 2035. The input devices enable the user to communicate information and select commands to the computer system. The input devices 2030 include alphanumeric keyboards and cursor-controllers. The output devices 2035 display images generated by the computer system. The output devices include printers and display devices, such as cathode ray tubes (CRT) or liquid crystal displays (LCD).

Finally, as shown in **Figure 20**, bus 2005 also couples computer 2000 to a network 2065 through a network adapter (not shown). In this manner, the computer can be a part of a network of computers (such as a local area network ("LAN"), a wide area network ("WAN"), or an Intranet) or a network of networks (such as the Internet). Any or all of the components of computer system 2000 may be used in conjunction with the invention. However, one of ordinary skill in the art will appreciate that any other system configuration may also be used in conjunction with the invention.

While the invention has been described with reference to numerous specific details, one of ordinary skill in the art will recognize that the invention can be embodied in other specific forms without departing from the spirit of the invention. For instance, many embodiments of the invention were described above by reference to macroblocks. One of ordinary skill will realize that these embodiments can be used in conjunction with any other array of pixel values.

## Claims

1. A method for encoding a first set of pixels in a first image by reference to a second image in a video sequence, the method comprising:

   a) in a first search window within a second image,
   
   searching to identify a first particular portion in the second image that best matches the first set of pixels in the first image. In the first search window within the second image;
   
   identifying a first location corresponding to the first particular portion; and

b) in a second search window within the second image, searching to identify a second particular portion in the second image that best matches the first set of pixels in the first image, where the second search window is defined about the first location.

2. The method of claim 1, wherein the second search window within the second image is smaller than the first search window in the second image.

3. The method of claim 1, wherein searching to identify the first particular portion comprise searching from more than one start location.

4. The method of claim 1, wherein searching in the first search window comprises a coarse search, wherein searching in the second search window comprises a refined search.

5. The method of claim 1, wherein searching in the second search window further comprises:

a) identifying a plurality of search points within the second search window;

b) for each particular search point, iteratively;

i. identifying a plurality of second groups of pixels

ii. computing a motion vector metric for each identified second group of pixels;

iii. specifying a best second group of pixels for each first group of pixels; and

iv. foregoing the remaining search point if a criterion is satisfied.

6. The method of claim 5 further comprising:

a) determining whether the specified second group of pixels associated with the particular group of pixels, has a computed motion vector metric that is above a threshold value; and

b) excluding from a subsequent search, the particular first group of pixels, after determining that the specified second group of pixels associated with the particular first group of pixels is above the threshold value.

7. The method of claim 6, wherein the threshold value is dynamically defined during searching in the second search window.

8. The method of claim 5, wherein searching in the second search window comprises searching at a first pixel level.

9. The method of claim 8, wherein searching in the second search window further comprises searching at a second pixel level, wherein the first pixel level is an integer pixel level, wherein the second pixel level is a half pixel level.

10. A method for interblock encoding images in a video sequence, where each image in the video sequence has a plurality of integer pixel locations, with each integer pixel location having at least one image value, the method comprising:

a) selecting a first image for encoding by reference to a second image;

b) identifying a first set of non-integer pixel locations in the second image that match a set of pixels in the first image, wherein this identification comprises interpolating the image values associated with the non-integer pixel locations in the second image from the image values of a plurality of integer pixel locations in the second image

c) storing the interpolated image values of the non-integer pixel locations for later use during the encoding of a third image by reference to the second image.

11. The method of claim 10 further comprising interpolating the image values of a group of other non-integer pixel locations in the second image after identifying the set of non-integer pixel locations in the second image.

12. The method of claim 11, wherein the group of non-integer pixel locations are located about the first set of non-integer pixel locations.

13. A method for interblock decoding images in a video sequence, where each image in the video sequence has a plurality of integer pixel locations, with each integer pixel location having at least one image value, the method comprising:

a) selecting a first image for decoding by reference to a second image.;

b) identifying a set of non-integer pixel locations in the second image that correspond to a set of pixels in the first image.

c) interpolating the image values associated with the non-integer pixel locations in the second image from the image values of a plurality of integer pixel locations in the second image; and

d) storing the interpolated image values of the non-integer pixel locations for later use during the decoding of a third image by reference to the second image.

**14.** The method of claim 13 further comprising interpolating the image values of a group of other non-integer pixel locations in the second image after interpolating the image values associated with the non-integer pixel location.

**15.** The method of claim 14, wherein the group of non-integer pixel locations are located about the first non-integer pixel location.

**16.** A method for interblock processing a first portion in a first image by reference to a second image in a sequence of video images, the method comprising:

a) dividing the second image into a set of tiles;
b) storing the tiles in a first non-cache memory storage;
c) retrieving from the first non-cache memory storage the sub-set of tiles, whenever a sub-set of tiles are needed; and
d) storing the retrieved sub-set of tiles in a second cache memory storage between the first portion and portions of the second image that are part of the retrieved sub-set of tiles, wherein the retrieved sub-set of tiles is smaller than the entire set of tiles.

**17.** The method of claim 16, wherein the method determines that it needs a sub-set of tiles to be retrieved and stored in the second cache memory storage when the method identifies a location in the second image to search to identify a portion in the second image that matches the first portion, wherein this identified location corresponds to the sub-set of tiles.

**18.** The method of claim 16, wherein the cache memory storage is a random access memory of a computer.

**19.** The method of claim 16, wherein the cache memory storage is a non-volatile storage device of the computer.

**20.** The method of claim 16, wherein the interblock processing method is an interblock encoding method.

**21.** The method of claim 16, wherein the interblock processing method is an interblock decoding method.

**22.** The method of claim 16, wherein, the set of tiles comprises at least two horizontally adjacent tiles and at least two vertically adjacent tiles.

**23.** The method of claim 16, wherein the tiles are stored in the cache memory storage sequentially.

**24.** An interblock encoding method that encodes a first set of pixels in a first video image, the method comprising:

a) selecting a first search pattern from a set of search patterns that each defines a pattern for examining portions of a second image that might match the first set of pixels; and
b) adaptively selecting the first search pattern in the set of search patterns, based on a set of criteria.

**25.** The method of claim 24, wherein the set of criteria comprises of a resolution encoding of the sequence of images in a media.

**26.** The method of claim 24, wherein the set of criteria comprises of motion vectors of neighboring motion vectors.

**27.** The method of claim 24, wherein the set of criteria comprises of a motion field in a set of video images.

**28.** A method for encoding a first set of pixels in a first image by reference to a second image in a sequence of images, the method comprising:

a) identifying a plurality of second sets of pixels in a second image;
b) computing a first metric score for each of the second set of pixel;
c) identifying a subset of second sets of pixels based on the first metric score;
d) from the subset of identified second sets of pixels;

i. computing a second metric score for each of the identified second set of pixels; and
ii. selecting the identified second set of pixels having the best second metric score, wherein the selected identified second set of pixels best matches the first set of pixels.

**29.** The method of claim 28, wherein each second set of pixels comprises a plurality of second grouping of pixels, wherein each second grouping of pixels comprises a plurality of second group of pixels.

**30.** The method of claim 29, wherein computing the first metric score comprises:

a) computing a first metric score for each second grouping of pixels; and
b) computing a first metric score for each second group of pixels.

**31.** The method of claim 30, wherein identifying the subset of second sets of pixels comprises identifying a subset of second groupings of pixels and a subset of second groups of pixels.

**32.** The method of claim 31, wherein computing the second metric score comprises computing a second metric score for each second grouping of pixels and each second group of pixels.

**33.** The method of claim 32, wherein the first metric score is a sum absolute difference ("SAD") metric score.

**34.** The method of claim 28, wherein identifying the subset of second sets pixels comprises selecting the top N second sets of pixels with the lowest first metric score.

**35.** The method of claim 34, wherein the second rate metric score is a rate distortion cost that quantifies the amount of data that has to be transmitted and the amount of distortion that is associated with the transmitted data.

**36.** The method of claim 28 further comprising:

a) computing a third metric score for the top N second set of pixels having the lowest second metric score; and
b) selecting the identified second set of pixels having the best third score,

wherein the selected identified second set of pixels best matches the first set of pixels.

*Figure 1*

200

*Figure 2*

Current Frame

Reference Frame

*Figure 3*

*Figure 4*

*Figure 6*

*Figure 5*

START

705

Select a location point

710

For each partition of pixels of current-frame macroblock, examine block of pixel associated with the location point

715

For each partition of pixels of current-frame macroblock, update best overall location of block of pixels that best matches particular partition of pixels of current-frame macroblock

YES

720

Another location point?

NO

730

725

Results of certain block size(s) not good enough?

YES

Exclude these block size(s) in subsequent examination

NO

735

Perform another search

END

*Figure 7*

Figure 8

*Figure 9*

*Figure 10*

*Figure 11*

*Figure 12*

Figure 13

*Figure 14*

*Figure 15*

*Figure 16*

*Figure 17*

*Figure 18*

1900

```
        ┌─────────────────┐
        │      START      │
        └─────────────────┘
                 │
                 ▼
  ┌──────────────────────────────┐      1910
  │ Rank the Motion Estimation Solution based
  │ on Highest to Lowest Estimated Errors │
  └──────────────────────────────┘
                 │
                 ▼
  ┌──────────────────────────────┐      1920
  │ Select the Top N Motion Estimation
  │ Solutions from List          │
  └──────────────────────────────┘
                 │
                 ▼
  ┌──────────────────────────────┐      1930
  │ Compute RD cost for the Selected Top N
  │ Motion Estimation Solutions  │
  └──────────────────────────────┘
                 │
                 ▼
  ┌──────────────────────────────┐      1940
  │ Select motion estimation with
  │ the lowest RD cost           │
  └──────────────────────────────┘
                 │
                 ▼
        ┌─────────────────┐
        │       End       │
        └─────────────────┘
```

*Figure 19*

*Figure 20*